# EUROPEAN PATENT APPLICATION

(11) **EP 4 711 430 A1**
(43) Date of publication of application: **18.03.2026**
(21) Application number: 25198041.3
(22) Date of filing: 26.08.2025
(51) Int. Cl.: C09D 183/16, C09D 183/14

(54) **METHOD FOR PRODUCING MODIFIED POLYSILAZANE CURED COATING, AND MODIFIED POLYSILAZANE CURED COATING**

(30) Priority: 03.09.2024 JP 2024151516
(71) Applicant: National University Corporation Yamagata University, Yamagata-shi, Yamagata 990-8560 (JP); SHIN-ETSU CHEMICAL CO., LTD., Tokyo 1000005 (JP)
(72) Inventor: SUZURI, Yoshiyuki, Yonezawa City, Yamagata, 992-0119 (JP); KANEKO, Tatsuro, Annaka-shi, Gunma, 379-0224 (JP)
(74) Representative: Vossius & Partner Patentanwälte Rechtsanwälte mbB

(57) **Abstract**

A method for producing a modified polysilazane cured coating, which makes it possible to densify a coating made of a polysilazane compound in a short period of time and produce a coating having a sufficiently low water vapor transmission rate in a short period of time, and a modified polysilazane cured coating obtained by the production method are provided.

In curing the polysilazane compound, a coating containing the polysilazane compound is irradiated with vacuum ultraviolet light (VUV) at an irradiation intensity within a specific range. Specifically, the method includes an application step for applying a base material with a solution containing a polysilazane compound represented by the following general formula (1) to form a coating, and a curing step for irradiating the coating with Xe excimer light to modify the polysilazane compound and form a cured coating of the modified polysilazane compound, and the illuminance of the Xe excimer light in the curing step is set to a range of 280 to 450 mW/cm².

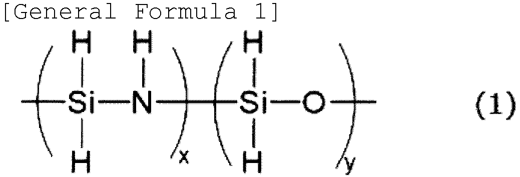

## Description

### Technical field

The present invention relates to a method for producing a modified polysilazane cured coating, and a modified polysilazane cured coating.

### Background Art

Gas barrier coatings are used in a wide range of fields, including various types of packaging and electronics. In particular, electronics products require high barrier performance against water vapor. The indicator for barrier performance against water vapor is the water vapor transmission rate (WVTR), and semiconductor devices such as organic EL devices and solar cells, for example, require barrier performance with water vapor transmission rate of 10⁻³ to 10⁻⁶ g/m²/day.

Inorganic barrier coatings produced by vacuum processes such as atomic layer deposition (ALD) and chemical vapor deposition (CVD) achieve very low water vapor transmission rates. In order to relieve the stress of such inorganic barrier coatings, a barrier structure having an inorganic/organic alternating laminated structure of an inorganic barrier coating and a stress-relieving layer into which a polymer has been introduced as a stress-relieving layer has also been proposed.

However, vacuum processes have low material utilization efficiency, and since a process with a pressure difference between atmospheric pressure and vacuum is repeated, problems such as foreign matter adhesion can be caused. In addition, coating formation speed is slower than that of wet processes. Furthermore, in the alternating laminated structure, the polymer that acts as the stress-relieving layer is generally formed by a coating method, which requires vacuum processes and coating processes alternately, resulting in high manufacturing costs.

On the other hand, a gas barrier layer that forms both a stress-relieving layer and an inorganic barrier coating by coating processes has also been reported. Such a gas barrier structure, which is formed entirely by a solution process, can achieve high resource efficiency and high processing volume (throughput), while also keeping manufacturing costs low.

However, the water vapor transmission rate of coatings obtained by all-solution processes such as a general sol-gel method is about 3 to 350 g/m²/day, and the denseness and barrier properties are lower than those of coatings obtained by vacuum processes.

In the coating formation of the barrier coating by the vacuum process, since there is a problem regarding low throughput such as coating formation speed, a coating formation method that combines the vacuum process and the wet process using perhydropolysilazane (PHPS) is being investigated.

Perhydropolysilazane (PHPS) is a reactive polymer with a Si-N bond as its main skeleton, and its coating can be formed by wet processes such as coating. When heated in air, it reacts with oxygen and converts to a SiO₂ coating, but it can also be converted to the SiO₂ coating by irradiating it with vacuum ultraviolet light (VUV) in air without heating. The barrier property of the SiO₂ coating obtained from perhydropolysilazane is 10⁻¹ to 10⁻² g/m²/day, and depending on the forming condition, the water vapor transmission rate can be reduced to approximately 10⁻³ g/m²/day.

However, the barrier property of SiO₂ coating is not sufficient for application in water vapor-sensitive electronic products. Therefore, it has been proposed to irradiate a perhydropolysilazane (PHPS) coating with vacuum ultraviolet light (VUV) under a nitrogen atmosphere to convert it into a silicon nitride (SiNₓ) coating (Patent Document 1). Silicon nitride (SiNₓ) coatings have high water vapor barrier properties.

Non-patent Document 1 describes a gas barrier layer prepared by an all-solution process in which polydimethylsiloxane (PDMS) with Si-O bonds as the main skeleton is used for the stress-relieving layer and perhydropolysilazane (PHPS) is used for the barrier layer. It is also described that a perhydropolysilazane (PHPS) coating is converted into a silicon nitride (SiNₓ)-based coating by irradiating it with vacuum ultraviolet light (VUV) in a nitrogen atmosphere, and the water vapor transmission rate of the obtained silicon nitride (SiNₓ)-based coating reaches 10⁻³ g/m²/day.

### Citation List

### Patent Document

Patent Document 1: Japanese Patent Application Laid-Open No. 2024-43265

### Non-patent Document

Non-patent Document 1: ACS Appl. Mater. Interfaces 11 (46), 43425-43432 (2019)

### Summary of Invention

### Technical Problem

The low water vapor transmission rate of the cured perhydropolysilazane (PHPS) coating is achieved by densifying the coating through irradiation with vacuum ultraviolet light (VUV) .
When a perhydropolysilazane (PHPS) coating is irradiated with vacuum ultraviolet light (VUV), not only the Si-H bonds and N-H bonds are broken, but also the Si-N bonds in the main chain are repeatedly broken and rebonded, causing atomic rearrangement. This atomic rearrangement reduces the porosity of the coating, leading to the densification of the coating.

Conventionally, in order to impart high density to a cured polysilazane coating, it has been necessary to irradiate the coating with a sufficient amount of vacuum ultraviolet light (VUV), and, for example, it has been necessary to irradiate the coating for several minutes or more. For this reason, from the viewpoint of membrane productivity, etc., it has been desired to accelerate the densification speed.

The present invention has been made in view of the above circumstances, and an object of the present invention is to provide a method for producing a modified polysilazane cured coating, which makes it possible to densify a coating made of a polysilazane compound in a short period of time and produce a coating having a sufficiently low water vapor transmission rate in a short period of time, and to provide a modified polysilazane cured coating obtained by the production method.

### Solution to Problems

The inventor has conducted intensive studies to achieve the above object. The inventor then discovered that by irradiating a coating containing a polysilazane compound with vacuum ultraviolet light (VUV) at an irradiation intensity within a specific range, a modified polysilazane cured coating having a gas barrier property equivalent to that of conventional coatings can be formed with an integrated light amount that is smaller than the integrated light amount conventionally required, and as a result, a modified polysilazane cured coating having the gas barrier property equivalent to that of conventional coatings can be obtained in a short period of time, which led to the completion of the present invention.

That is, the present invention includes the following aspects.
[1] A method for producing a modified polysilazane cured coating comprising;
   an applying step of applying a solution containing a polysilazane compound represented by the following general formula (1) to a base material to form a coating, and
   a curing step of forming a cured coating of the modified polysilazane compound by irradiating the coating with Xe excimer light to modify the polysilazane compound, wherein
   an illuminance of the Xe excimer light in the curing step is 280 to 450 mW/cm². 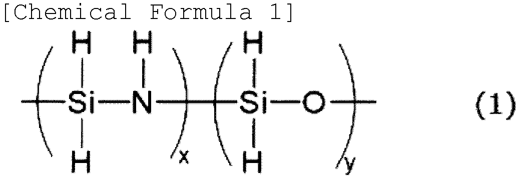
   (In the general formula (1), x is an integer such that 20<x≤1,000, and y is an integer such that 0≤y<(x/10).)
[2] The method for producing a modified polysilazane cured coating according to the aspect [1], wherein the modified polysilazane compound has a ratio of (N+O)/Si, the total number of nitrogen atoms and oxygen atoms to the number of silicon atoms, in the range of 0.9 to 1.1.
[3] The method for producing a modified polysilazane cured coating according to the aspect [1], wherein the polysilazane compound is perhydropolysilazane.
[4] The method for producing a modified polysilazane cured coating according to the aspect [1], wherein the integrated light amount of the Xe excimer light irradiated to the coating is in a range of 1,000 to 10,000 mJ/cm².
[5] The method for producing a modified polysilazane cured coating according to the aspect [1], wherein the Xe excimer light is irradiated in a nitrogen atmosphere with an oxygen concentration of 0.1% or less.
[6] The method for producing a modified polysilazane cured coating according to the aspect [1], wherein the base material is an organic resin film.
[7] The method for producing a modified polysilazane cured coating according to the aspect [1], wherein the base material is a polyimide (PI) film or a polyethylene terephthalate (PET) film.
[8] A modified polysilazane cured coating obtained by the method for producing a modified polysilazane cured coating according to any one of the aspects [1] to [7].

### Effect of the Invention

According to the present invention, the modified polysilazane cured coating having the gas barrier property equivalent to that of conventional coatings can be obtained in a short period of time.

In addition, according to the method for producing a modified polysilazane cured coating of the present invention, the modified polysilazane cured coating having a gas barrier property higher than that of conventional coatings can be formed with an integrated light amount that is smaller than the integrated light amount conventionally required. Therefore, a polysilazane cured coating having gas barrier property can be obtained efficiently using a smaller amount of energy than in the past.

Furthermore, according to the method for producing a modified polysilazane cured coating of the present invention, the modified polysilazane cured coating having higher gas barrier properties than that of conventional coatings can be formed with an integrated light amount that is equal to the integrated light amount conventionally required.

Therefore, according to the method for producing a modified polysilazane cured coating of the present invention, a silicon coating material having high gas barrier property can be obtained in a short time by the application process while realizing high resource efficiency and high processing volume (throughput).

### Brief Description of Drawing

FIG. 1 is a diagram showing the results of elemental analysis by RBS/HFS method for polysilazane used in the examples and comparative examples.
FIG.2 is a diagram showing the results of elemental analysis of the modified perhydropolysilazane cured coating obtained at an integrated light amount of 6 J/cm² in Comparative Example 1.
FIG. 3 is a diagram showing the results of elemental analysis of the modified perhydropolysilazane cured coating obtained with an integrated light amount of 6 J/cm² in Example 2.
FIG. 4 shows the results of refractive index distribution by spectroscopic ellipsometry of the modified polysilazane cured coatings of Comparative Examples 1 to 3.
FIG. 5 shows the results of refractive index distribution by spectroscopic ellipsometry of the modified polysilazane cured coatings of Examples 1 to 3.
FIG. 6 is a graph of the relationship between the refractive index and the lamp intensity (irradiation intensity) of the TOP layer of the modified polysilazane cured coating.

### Description of Embodiments

### <<Method for Producing a Modified Polysilazane Cured Coating>>

The method for producing a modified polysilazane cured coating of the present invention comprises an applying step of applying a solution containing a polysilazane compound to a base material to form a coating, and a curing step of forming a cured coating of the modified polysilazane compound by irradiating the coating with Xe excimer light to modify the polysilazane compound, wherein an illuminance of the Xe excimer light in the curing step is within a specific range. In addition, if necessary, a drying step may be included between the applying step and the curing step to volatilize the solvent contained in the coating formed in the applying step by heating or other means to form a dried coating. The following describes each element.

### <Polysilazane Compound>

The polysilazane compound used in the method for producing the modified polysilazane cured coating of the present invention is represented by the following general formula (1). Any compound represented by the following general formula (1) can be selected without limitation as long as it does not impair the effects of the present invention. 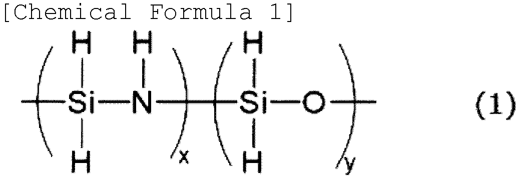 (In the general formula (1), x is an integer such that 20<x≤1,000, and y is an integer such that 0≤y<(x/10).)

The polysilazane compound used in the method for producing the modified polysilazane cured coating of the present invention may be used either alone or in combination of two or more kinds.

The mass average molecular weight of the polysilazane compound used in the present invention is, for example, 900 to 50,000, and more preferably 900 to 20,000, from the viewpoints of solubility in a solvent and reactivity. Note that the mass average molecular weight referred to here is a mass average molecular weight calculated by converting to polystyrene, and can be measured by gel permeation chromatography.

In the general formula (1), x is preferably an integer satisfying 30<x≤600, more preferably 60<x≤400, and particularly preferably 100<x≤200.

The polysilazane compound used in the method for producing the modified polysilazane cured coating of the present invention is preferably such that the total value of the nitrogen atom number and the oxygen atom number relative to the silicon atom number, (N+O)/Si, is in the range of 0.9 to 1.1. Within this range, a cured coating with sufficiently low water vapor transmission rate (WVTR) can be formed.

It is more preferable that the total value of the nitrogen atom number and the oxygen atom number relative to the silicon atom number, (N+O)/Si, is in the range of 0.90 to 1.05, and particularly preferable, in the range of 0.90 to 1.00.

The polysilazane compounds used in the method for producing the modified polysilazane cured coating of the present invention include, in particular, perhydropolysilazane (PHPS) or its derivatives, wherein y=0 in the above general formula (1). Perhydropolysilazane (PHPS) is a silicon-containing polymer that contains Si-N bonds as repeating units and consists only of Si, N, and H. Perhydropolysilazane (PHPS) is a compound in which all elements bonded to Si and N are H, except for the Si-N bond, and other elements such as carbon and oxygen are essentially absent.

Note that, in the above general formula (1), polysilazane compounds other than y=0 can be produced as follows. A solution in which the polysilazane compound is dissolved can be obtained by mixing the chlorosilanes and the organic solvent in a nitrogen atmosphere in a state in which a specific amount of water is present relative to the total mass of the chlorosilanes and the organic solvent, and then blowing in ammonia and removing the generated salt. Note that, by adjusting the amount of water in the reaction, a polysilazane compound represented by the general formula (1) having a desired composition can be produced. Specifically, for example, it can be obtained by the following method.

### (Production Example of Polysilazane Compound with y≠0)

0.19 mol of dichlorosilane with a purity of 99% or more was blown into 300 ml of pyridine at -10°C containing 373 ppm of water while stirring with nitrogen gas.
At this time (initial reaction stage), the moisture content (initial moisture content) relative to the total mass of chlorosilanes and amines was 350 ppm.

Next, 0.57 mol of ammonia with a purity of 99% or higher was blown in, and the generated salt was removed by pressure filtration, resulting in a solution containing dissolved polysilazane compounds. At this point (end of reaction), the total moisture content of the solution (final moisture content) was 412 ppm.

The solution containing the obtained polysilazane compound was heated to 150°C, and 150 ml of pyridine was removed. Next, 300 ml of dibutyl ether was added, and pyridine was removed by azeotropic distillation, then the polysilazane compound was obtained.

In the general formula (1) of the obtained polysilazane compounds, x was 170 and y was 10.

### <Modified Polysilazane Cured Coating>

The modified polysilazane cured coating obtained by the method for producing the modified polysilazane cured coating of the present invention is a coating formed on a base material by curing the polysilazane compound described above.

The modified polysilazane cured coating obtained by the method for producing the modified polysilazane cured coating of the present invention has a refractive index distribution in the thickness direction. When there is no significant change in composition, the refractive index correlates with density, and the refractive index serves as an indicator of density. In other words, the area near the surface where Xe excimer light is irradiated tends to become denser due to the densification of polysilazane, resulting in a higher refractive index, while the area near the base material tends to have a lower refractive index because Xe excimer light does not easily reach it.

Specifically, the refractive index of the area near the surface irradiated with Xe excimer light is 1.6 to 2.0, preferably 1.65 to 1.85, and the refractive index of the area near the base material is 1.50 to 1.6, preferably 1.50 to 1.54.

Note that, the refractive index distribution in the thickness direction of the modified polysilazane cured coating can be determined using spectroscopic ellipsometry. The refractive index distribution can be modeled using a four-layer analysis model that includes a thin SiO₂ layer formed on the surface of the modified polysilazane cured coating.

### <Applying Step>

The applying step in the method for producing the modified polysilazane cured coating of the present invention is a step of coating a solution containing a polysilazane compound on a base material to form a coating.

### [Solvent]

Solvents for dissolving polysilazane compounds are not particularly limited, but examples include aromatic compounds such as benzene, toluene, xylene, ethylbenzene, diethylbenzene, trimethylbenzene, and triethylbenzene; aliphatic hydrocarbon compounds such as pentane, 2-methylbutane, hexane, 2-methylpentane, heptane, 2-methylhexane, octane, 2,2,4-trimethylpentane, nonane, decane, and 2-methylnonane; cyclic hydrocarbon compounds such as ethylcyclohexane, methylcyclohexane, cyclohexane, p-menthane, decahydronaphthalene, and dipentene; ethers such as dipropyl ether, dibutyl ether (DBE), and methyl-t-butyl ether (MTBE); and ketones such as methyl isobutyl ketone (MIBK). Note that these may be used alone or in combination of two or more.

### [Concentration]

The concentration of the polysilazane compound in the solution containing the polysilazane compound may be usually 5 to 95% by weight, preferably 5 to 20% by weight, although it depends on the application method.

### [Other Components]

The solution containing the polysilazane compound may contain other components besides the polysilazane compound within a range that does not impair the effects of the present invention. Examples of other components include additives such as fillers, leveling agents, antistatic agents, and ultraviolet absorbers, and surfactants. When a filler is added, the amount of the filler may be usually 0.05 to 10 parts by mass, and preferably 0.2 to 3 parts by mass, per part by mass of the polysilazane compound.

### [Base Material]

The base material used in the method for producing the modified polysilazane cured coating of the present invention is not particularly limited, but may be an organic resin film. Since organic resin films generally have high moisture permeability, the modified polysilazane cured coating obtained by the present invention can impart high gas barrier properties.

The base material used in the method for producing the modified polysilazane cured coating of the present invention may more preferably be a polyimide (PI) film or a polyethylene terephthalate (PET) film.

The base material used in the method for producing the modified polysilazane cured coating of the present invention may be a thin glass film having a thickness of about 10 to 150 µm depending on the application. The thin glass film may be a single film, or may be a thin glass film laminated with a metal foil such as an aluminum foil or a resin. The base material used in the method for producing a modified polysilazane cured coating of the present invention may be a metal foil such as a stainless steel foil, an aluminum foil, or a copper foil.

Note that, the surface of the base material may be degreased or washed before applying the solution containing the polysilazane compound to the base material, so that the resin that is cured by light or heat can be easily attached to the base material. Examples of the method for degreasing or washing the surface of the base material include excimer treatment, UV ozone treatment, atmospheric pressure plasma treatment, plasma treatment, and corona discharge treatment etc.

### [Applying Method]

The method for applying the solution containing the polysilazane compound to the base material is not particularly limited, and a known method can be applied. For example, the method for applying the solution containing the polysilazane compound to the base material includes spin coating, roll coating, flow coating, inkjet coating, spray coating, dip coating, casting film formation, bar coating, die coating, gravure coating, gravure printing, and screen printing etc.

Before applying the solution containing the polysilazane compound to the base material, the surface of the base body may be degreased or washed to facilitate adhesion of the polysilazane compound to the base material.

Application of the base material may be performed at room temperature in an inert atmosphere such as nitrogen or in air. Performing the application at room temperature in air is more labor-saving and less expensive than performing the application in an inert gas atmosphere, which requires a closed system.

Note that the base material to which the solution containing the polysilazane compound is applied may be surface-modified by ozone cleaning using vacuum ultraviolet light or ultraviolet light. Active oxygen separated from ozone generated by vacuum ultraviolet light or ultraviolet light collides with the surface of the base material, and decomposes and removes organic contaminants present on the base material surface. The base material surface modified by ozone cleaning has improved wettability, making it easier to apply the solution containing the polysilazane compound to the base material.

### <Drying Step>

When the coating obtained in the applying step contains a large amount of solvent, a drying step may be performed before the curing step described below. The drying step in the method for producing a modified polysilazane cured coating of the present invention is a step in which the coating obtained in the applying step is heated by a heater or irradiated with energy rays such as infrared rays to volatilize the solvent remaining in the coating, thereby obtaining a dried coating.

There are no particular restrictions on the conditions for heating the coating, so long as the temperature and time are such that the remaining solvent is sufficiently evaporated. However, if the coating is heated above the boiling point of the solvent or the heat resistance temperature of the base material, voids may form in the coating film, or the base material may shrink or distort, therefore, care must be taken with the heating temperature to avoid such situations.

### <Curing Step>

The curing step in the method for producing a modified polysilazane cured coating of the present invention is a step of irradiating the coating obtained in the applying step with Xe excimer light to modify the polysilazane compound and form a cured coating of the modified polysilazane compound.

### [Xe Excimer Light]

The Xe excimer light irradiated to the coating obtained in the applying step is vacuum ultraviolet light (VUV) having a wavelength of 172 nm**.** The irradiation of vacuum ultraviolet light (VUV) is usually performed using a commercially available excimer lamp (wavelength 172 nm).

### [Illuminance]

In the manufacturing method of the modified polysilazane cured coating of the present invention, the illuminance of the Xe excimer light irradiated to the coating obtained in the applying step is in the range of 280 to 450 mW/cm². In the present invention, by using Xe excimer light with an illuminance in this range, it is possible to densify the coating made of the polysilazane compound in a short time and to manufacture a modified polysilazane cured coating with a sufficiently low water vapor permeability in a short time.

### [Integrated Light Amount]

The integrated light amount of the Xe excimer light irradiated to the coating obtained in the application step is preferably in the range of 1,000 to 10,000 mJ/cm². The integrated light amount (mJ/cm²) is calculated by multiplying the illuminance of the Xe excimer light (mW/cm²) by the curing time (sec).

The integrated light amount may be more than 10,000 mJ/cm², but in that case, the effect obtained by the present invention will be weaker.

The method for producing the modified polysilazane cured coating of the present invention not only can provide a modified polysilazane cured coating with a sufficiently low water vapor transmission rate in a short time, but also can produce the modified polysilazane cured coating with a higher level of gas barrier properties than conventional methods with a smaller integrated light amount than conventionally required. Therefore, the polysilazane cured coating with gas barrier properties can be produced efficiently with a smaller amount of energy than conventional methods.

Furthermore, the method for producing a modified polysilazane cured coating of the present invention can produce a modified polysilazane cured coating having higher gas barrier properties than conventional coatings with the same integrated light amount as conventional coatings.

### [Atmosphere]

The atmosphere in which the curing step is carried out is not particularly limited. However, when a coating containing a polysilazane compound is irradiated with vacuum ultraviolet light (VUV), the Si-N bonds in the main chain are repeatedly broken and rebonded, causing atomic rearrangement, which reduces the porosity of the coating and promotes densification of the coating, therefore, in order to facilitate the densification of the coating, it is preferable that the atmosphere in which the Xe excimer light is irradiated is a nitrogen atmosphere.

Furthermore, in the method for producing a modified polysilazane cured coating of the present invention, it is preferable to irradiate the Xe excimer light in a nitrogen atmosphere with an oxygen concentration of 0.1% or less. By irradiating the Xe excimer light in a nitrogen atmosphere containing almost no oxygen, the coating becomes more dense, and a modified polysilazane cured coating having a high level of gas barrier property can be produced in a short period of time.

The temperature at which the curing step is carried out is not particularly limited, and may be, for example, room temperature (approximately 15 to 40° C.). For example, the curing step may be carried out at elevated temperatures such as 100 to 120° C., but the same effect can be obtained even if the curing step is carried out at room temperature.

### <<Uses of Modified Polysilazane Cured Coating>>

The modified polysilazane cured coating obtained by the present invention has excellent gas barrier property and can be used as a variety of gas barrier layers.

Furthermore, the cured film obtained from polysilazane has excellent heat resistance and insulating property in addition to gas barrier property. Therefore, for example, by forming a modified polysilazane cured coating on the surface of a resin film, it can be used as a sealant for an organic EL element.

### EXAMPLES

The present invention will now be described in more detail with reference to examples, but the present invention is not limited to the following examples.

### <Examples 1-3, Comparative Examples 1-3>

A solution containing perhydropolysilazane (PHPS) was applied to a silicon wafer (Si), and the resulting coating was irradiated with Xe excimer light (VUV light) at six different lamp intensities (irradiation intensity) and modified polysilazane cured coatings were produced.

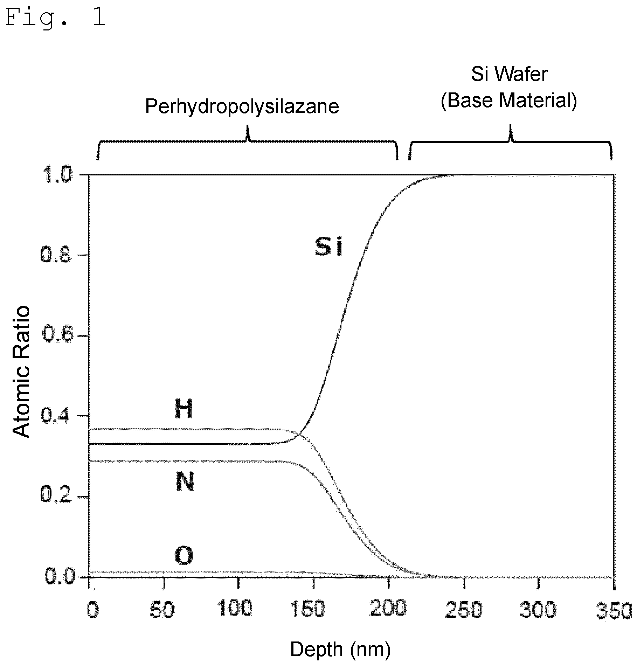

Note that the results of elemental analysis of the perhydropolysilazane (PHPS) used are shown in Figure 1. The chart shown in Figure 1 is obtained by analyzing the element ratio of the polymer using Rutherford backscattering spectroscopy (RBS) and hydrogen backscattering spectroscopy (HFS). Note that the analysis chart is before correction for the desorbed hydrogen atoms.

In addition, the elemental analysis results after creating a calibration curve and making corrections for the hydrogen atoms that detached are shown in Table 1.

**[Table 1]**

| | Element Ratio (%) | | | |
|---|---|---|---|---|
| | Si | N | H | O |
| Perhydropolysilazane | 26.0 | 22.7 | 50.3 | 1.0 |

The elemental ratios relative to the number of silicon atoms were calculated from the elemental analysis results and are shown in Table 2.

**[Table 2]**

| Elemental Ratio Relative to Si | | | |
|---|---|---|---|
| H/Si | N/Si | O/Si | (N+O)/Si |
| 1.93 | 0.87 | 0.04 | 0.91 |

### [Applying Step]

Perhydropolysilazane (PHPS) 20% dibutyl ether (DBE) solution was diluted with anhydrous DBE solution under nitrogen to prepare a PHPS 10% DBE solution. In ambient condition (25°C, 25% humidity), the prepared PHPS 10% DBE solution was spin-coated onto 30×30 mm silicon wafers (Si) to form a PHPS coating/Si. The spin-coating was performed at a rotation speed of 2000 rpm for 30 seconds.

### [Curing Step]

The obtained PHPS coating/PHPS coating of Si was irradiated with Xe excimer light (VUV light) to produce a modified polysilazane cured coating. The Xe excimer light (VUV light) was irradiated with an excimer irradiation device (wavelength = 172 nm) manufactured by M.D.COM.

### (Irradiation atmosphere)

Xe excimer light (VUV light) irradiation was carried out in a nitrogen atmosphere (oxygen and water vapor concentration <0.01%).

### (Irradiation Intensity)

The lamp intensity (irradiation intensity) was set to six levels between 103 and 328 mW/cm² (103, 229, 259, 290, 309, 328 mW/cm²), and the distance between the lamp and the PHPS coating/Si was set to 2 mm. Here, the lamp intensity (irradiation intensity) represents the actual irradiation intensity on the PHPS coating. Specifically, using a power meter (C9536, sensor head: H9535-172), manufactured by Hamamatsu Photonics, the irradiation intensity of Xe excimer light (VUV light) was measured at a location where the distance between the sensor head and the lamp was 2 mm, similar to the distance between the lamp and the PHPS coating.

The lamp intensity (irradiation intensity) of 103 mW/cm² is used as Comparative Example 1, and one of 229 mW/cm² is used as Comparative Example 2, one of 259 mW/cm² is used as Comparative Example 3, one of 290 mW/cm² is used as Example 1, one of 309 mW/cm² is used as Example 2, and one of 328 mW/cm² is used as Example 3.

### (Integrated Light Amount)

The integrated light amount of the Xe excimer light (VUV light) was set to 6 to 72 J/cm².

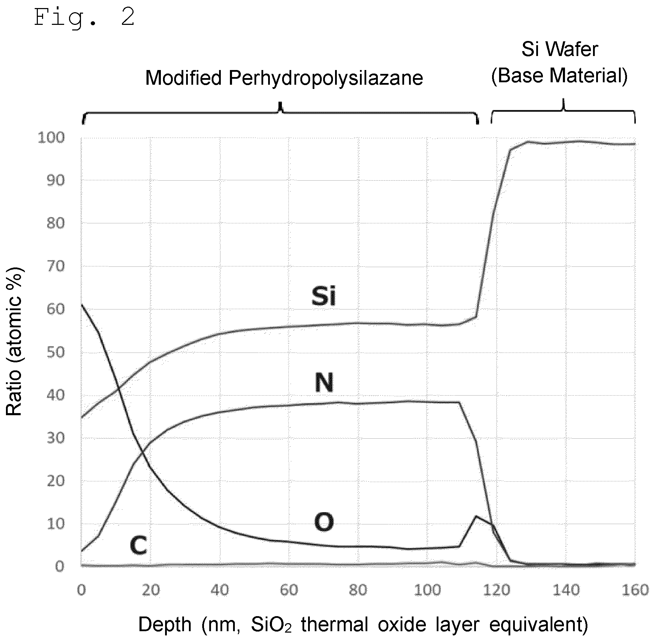

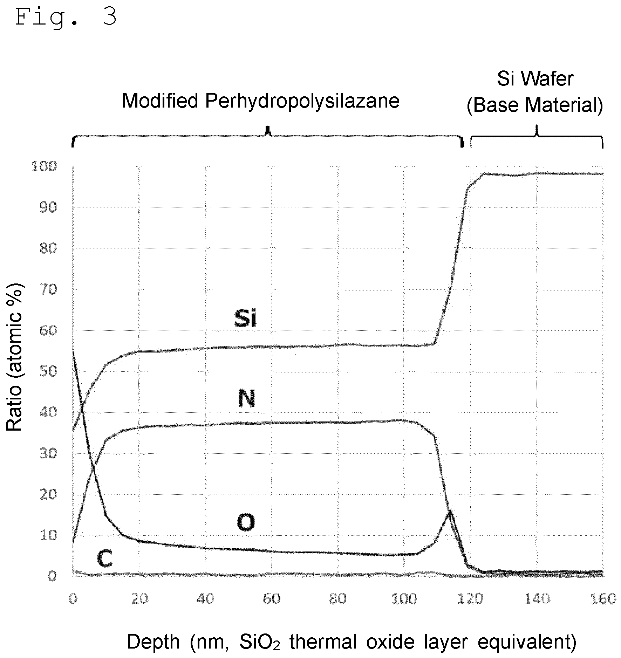

Note that in Comparative Example 1 with a lamp intensity (irradiation intensity) of 103 mW/cm² and the integrated light amount of 6 J/cm², the results of elemental analysis of the modified perhydropolysilazane cured coating obtained are shown in Figure 2. In addition, in Example 2 with a lamp intensity (irradiation intensity) of 309 mW/cm² and an integrated light amount of 6 J/cm², the results of elemental analysis of the modified perhydropolysilazane cured coating obtained are shown in Figure 3.

In both the elemental analysis results of Comparative Example 1 and Example 2, the surface (0 nm) of the cured coating was oxidized, but the inside of the cured coating had a composition with a high nitrogen ratio. Note that the composition of the inside was almost the same between the Comparative Example 1 and the Example 2, with Si being about 56%, N being about 38%, and O being about 6%.

### (Refractive Index Distribution Measurement)

The density of the modified polysilazane cured coating obtained was measured as the refractive index distribution in the film thickness direction by using a spectroscopic ellipsometry (J.A. Woollam Japan Co., Ltd., model: WoollamVASE32). In the absence of significant changes in composition, the refractive index is correlated with density, so the refractive index can be an index of density (denseness).

The measurement wavelength of the spectroscopic ellipsometry was set to 250 to 1000 nm, and the incident angle was changed to seven angles of 45 degree, 50 degree, 55 degree, 60 degree, 65 degree, 70 degree, and 75 degree. The obtained results were fitted as a four-layer structure of modified polysilazane cured coating/Si.

It has also been known from previous research that the photo-densified modified polysilazane cured coating has a refractive index distribution in the thickness direction (Adv. Mater. Interfaces, 2201517 (8 pp.) (2022)). Therefore, the outermost layer is set as an SiO₂ layer in which perhydropolysilazane (PHPS) is naturally oxidized, and the SiN layer region between the SiO₂ layer and the Si layer is made into three layers in the thickness direction (Top layer, Mid layer, Bot layer) and fitted. In particular, the irradiation of Xe excimer light (VUV light) is strongest, and in order to quantitatively evaluate the Top layer, which is prone to photo-densification, the layer thickness of the Top layer was fixed at 30 nm.

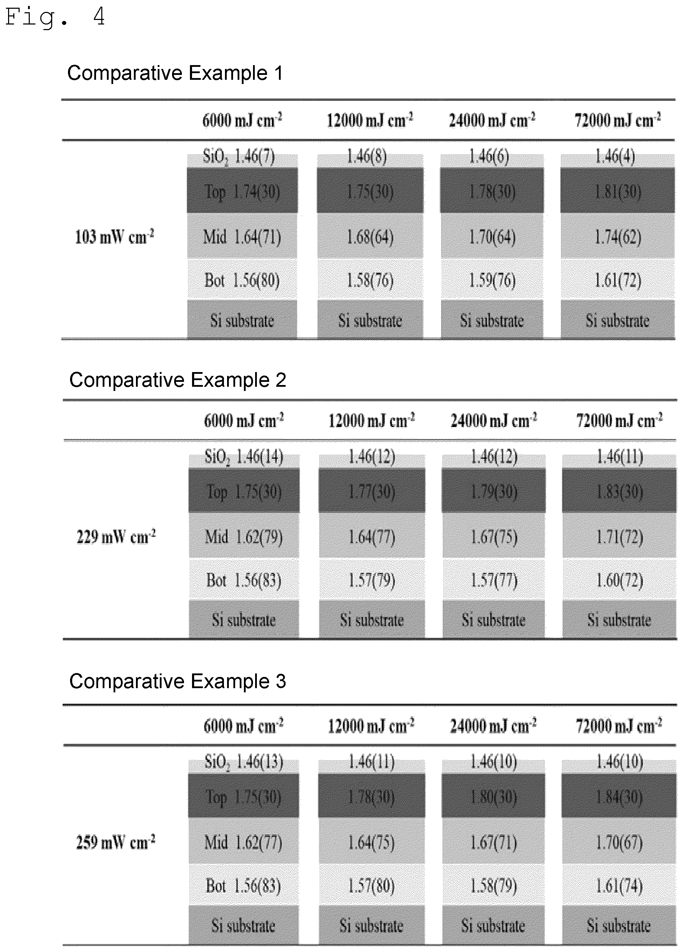

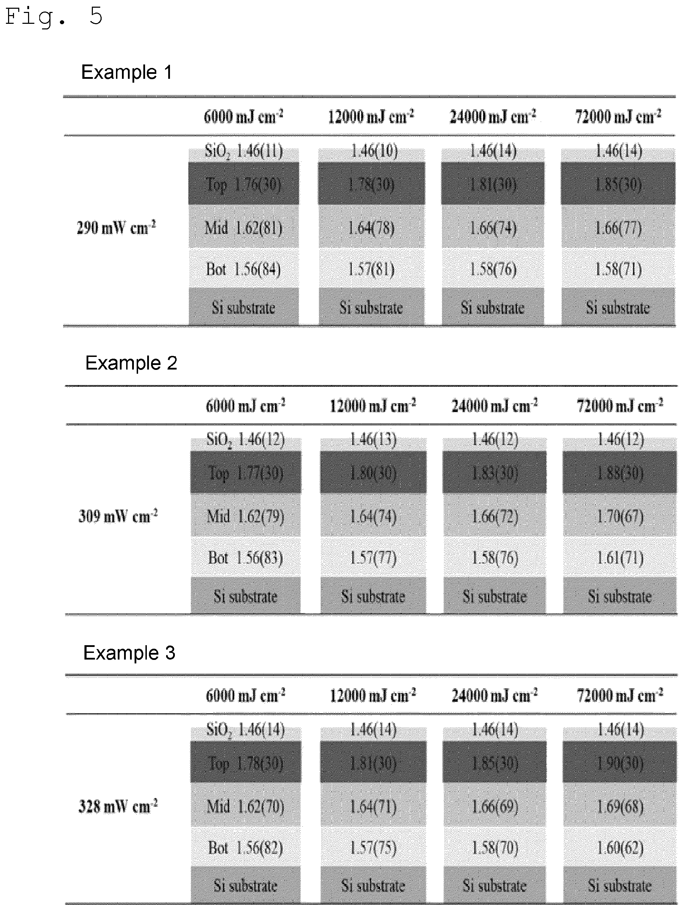

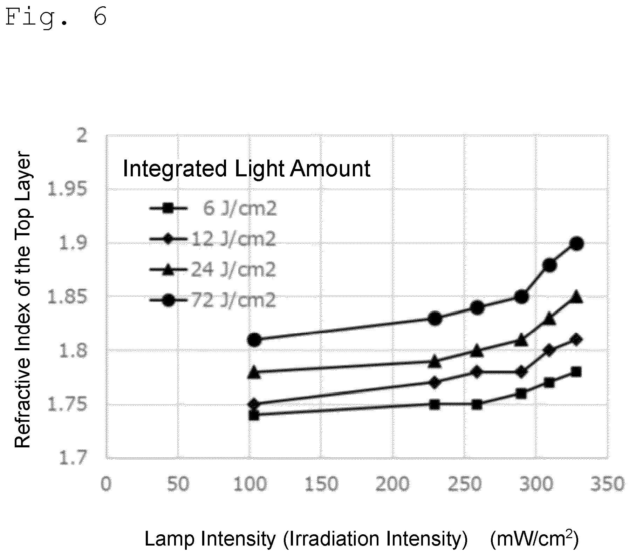

The obtained results are shown in Figures 4 and 5. In addition, the refractive indexes of the TOP layer (30 nm) when the integrated light amount at each lamp intensity (irradiation intensity) is 6 J/cm², 12 J/cm², 24 J/cm², and 72 J/cm² are shown in Table 3 and Figure 6, and the irradiation time required to reach each integrated light amount is shown in Table 4.

**[Table 3]**

| | Lamp Intensity (Irradiation Intensity) (mW/cm²) | Refractive Index of Top Layer | | | |
|---|---|---|---|---|---|
| | | Integrated Light Amount 6 J/cm² | Integrated Light Amount 12 J/cm² | Integrated Light Amount 24 J/cm² | Integrated Light Amount 72 J/cm² |
| Comparative Example 1 | 103 | 1.74 | 1.75 | 1.78 | 1.81 |
| Comparative Example 2 | 229 | 1.75 | 1.77 | 1.79 | 1.83 |
| Comparative Example 3 | 259 | 1.75 | 1.78 | 1.80 | 1.84 |
| Example 1 | 290 | 1.76 | 1.78 | 1.81 | 1.85 |
| Example 2 | 309 | 1.77 | 1.80 | 1.83 | 1.88 |
| Example 3 | 328 | 1.78 | 1.81 | 1.85 | 1.90 |

**[Table 4]**

| | Lamp Intensity (Irradiation Intensity) (mW/cm²) | Irradiation Time (Sec.) | | | |
|---|---|---|---|---|---|
| | | Integrated Light Amount 6 J/cm² | Integrated Light Amount 12 J/cm² | Integrated Light Amount 24 J/cm² | Integrated Light Amount 72 J/cm² |
| Comparative Example 1 | 103 | 59 | 117 | 234 | 700 |
| Comparative Example 2 | 229 | 27 | 53 | 105 | 315 |
| Comparative Example 3 | 259 | 24 | 47 | 93 | 278 |
| Example 1 | 290 | 21 | 42 | 83 | 249 |
| Example 2 | 309 | 20 | 39 | 78 | 234 |
| Example 3 | 328 | 19 | 37 | 74 | 220 |

### [Discussion]

At all lamp intensities (irradiation intensities), the refractive index of the TOP layer increased as the integrated light amount increased.

In addition, it was confirmed that, in the case of the same integrated light amount, the refractive index of the TOP layer increases as the lamp intensity (irradiation intensity) increases. In other words, it was shown that the photo-induced densification reaction of polysilazane is highly dependent on the lamp intensity.

Originally, if the photo-induced densification reaction of polysilazane were a single-photon reaction, it would be expected that the refractive index would be determined by the integrated light amount, regardless of the lamp intensity (irradiation intensity). However, the present experiment demonstrated that the photo-induced densification reaction is highly dependent on the lamp intensity (irradiation intensity), indicating that the photo-induced densification reaction of polysilazane is not a single-photon reaction but a multi-photon reaction.

It was shown that, for the same integrated light amount, the refractive index of the TOP layer increases as the lamp intensity (irradiation intensity) increases. In particular, the increase in the refractive index is rapidly accelerated at the lamp intensity of 290 mW/cm² or more. This shows that polysilazane is effectively densified at a boundary where the lamp intensity (irradiation intensity) of 290 mW/cm² or more.

In addition, when comparing the time required for the refractive index of the TOP layer to become equivalent at different lamp intensities (irradiation intensities), if the conditions for the refractive index of the TOP layer in Comparative Example 1, where the lamp intensity (irradiation intensity) is 103 mW/cm², reaches 1.78 (integrated light amount of 24J/cm²) are used as the standard, 234 seconds are required in Comparative Example 1, whereas in Example 3, where the lamp intensity (irradiation intensity) is 328 mW/cm², the refractive index of the TOP layer reaches 1.78 with an integrated light amount of 6 J/cm², and so it takes only 19 seconds.

Therefore, by increasing the lamp intensity (irradiation intensity) by about 3.2 times, the irradiation time in Example 3 could be shortened to 1/12 of that in Comparative Example 1, that is, to only 8% of that in Comparative Example 1.

Furthermore, when compared at the refractive index of the TOP layer of 1.81, which has a higher refractive index due to the increased densification of the cured coating, the irradiation time of Example 3 (integrated light amount of 12 J/cm²) was shortened to 1/19 of that of Comparative Example 1 (integrated light amount of 72 J/cm²), that is, to 5% of the time, and a significant reduction in irradiation time was achieved compared to the conventional method.

## Claims

1. A method for producing a modified polysilazane cured coating comprising;
an applying step of applying a solution containing a polysilazane compound represented by the following general formula (1) to a base material to form a coating, and
a curing step of forming a cured coating of the modified polysilazane compound by irradiating the coating with Xe excimer light to modify the polysilazane compound, wherein
an illuminance of the Xe excimer light in the curing step is 280 to 450 mW/cm². 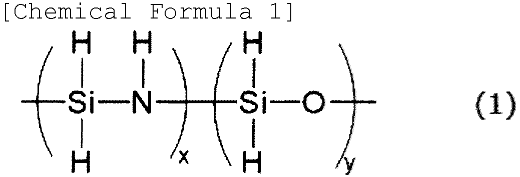
(In the general formula (1), x is an integer such that 20<x≤1,000, and y is an integer such that 0≤y<(x/10).)

2. The method for producing a modified polysilazane cured coating according to Claim 1, wherein the modified polysilazane compound has a ratio of (N+O)/Si, the total number of nitrogen atoms and oxygen atoms to the number of silicon atoms, in the range of 0.9 to 1.1.

3. The method for producing a modified polysilazane cured coating according to Claim 1, wherein the polysilazane compound is perhydropolysilazane.

4. The method for producing a modified polysilazane cured coating according to Claim 1, wherein the integrated light amount of the Xe excimer light irradiated to the coating is in a range of 1,000 to 10,000 mJ/cm².

5. The method for producing a modified polysilazane cured coating according to Claim 1, wherein the Xe excimer light is irradiated in a nitrogen atmosphere with an oxygen concentration of 0.1% or less.

6. The method for producing a modified polysilazane cured coating according to Claim 1, wherein the base material is an organic resin film.

7. The method for producing a modified polysilazane cured coating according to Claim 1, wherein the base material is a polyimide (PI) film or a polyethylene terephthalate (PET) film.

8. A modified polysilazane cured coating obtained by the method for producing a modified polysilazane cured coating according to any one of Claims 1 to 7.
